# EUROPÄISCHE PATENTANMELDUNG

(11) **EP 2 993 310 A1**
(43) Veröffentlichungstag der Anmeldung: **09.03.2016**
(21) Anmeldenummer: 15183754.9
(22) Anmeldetag: 03.09.2015
(51) Int. Cl.: F01D 17/10, F02K 3/075

(54) **VORRICHTUNG ZUR ENTNAHME VON ZAPFLUFT UND FLUGZEUGTRIEBWERK MIT MINDESTENS EINER VORRICHTUNG ZUR ENTNAHME VON ZAPFLUFT**

(30) Priorität: 05.09.2014 DE 102014217831
(71) Anmelder: Rolls-Royce Deutschland Ltd & Co KG, 15827 Blankenfelde-Mahlow (DE)
(72) Erfinder: THIES, Robert, 14548 Schwielowsee (DE)
(74) Vertreter: Maikowski & Ninnemann

(57) **Zusammenfassung**

Die Erfindung betrifft eine Vorrichtung zur Entnahme von Zapfluft aus strömender Luft an oder in einem Flugzeugtriebwerk. Die Vorrichtung weist ein Einstellmittel (10) für die gezielte Einstellung eines Einlassquerschnitts (A) einer Öffnung (1) in oder an einer Wandung (102) für die Zapfluft (Z) im Betrieb des Flugzeugtriebwerkes (100) auf. Dabei ist die Öffnung (1) für die Zapfluft (Z) in oder an einer verformbaren Basis (2) angeordnet und das Einstellmittel (10) wirkt auf die verformbare Basis (2) zur Änderung des Einlassquerschnitts (A) der Öffnung (1) relativ zur strömenden Luft (L) ein, wobei die verformbare Basis (2) Teil eines metallischen Gehäuses im Flugzeugtriebwerk (100) ist. Die Erfindung betrifft auch ein Flugzeugtriebwerk (100) mit einer solchen Vorrichtung.

## Beschreibung

Die Erfindung betrifft eine Vorrichtung zur Entnahme von Zapfluft mit den Merkmalen des Anspruchs 1 und ein Flugzeugtriebwerk mit den Merkmalen des Anspruchs 13.

Im Betrieb eines Flugzeugtriebwerkes kann es notwendig sein, dass eine bestimmte Luftmenge aus strömender Luft abgezweigt wird, um z.B. als Kühlluft oder Luft für die Klimatisierung einer Passagierkabine eines Flugzeugs zu dienen. Die abgezweigte Luft wird im Folgenden als Zapfluft bezeichnet.

Die strömende Luft, aus der die Zapfluft entnommen wird, kann z.B. durch einen Nebenstromkanal (Bypass-Duct) strömen oder um das Flugzeugtriebwerk herumströmen.

Die bekannten Vorrichtungen zur Entnahme der Zapfluft ragen ständig in den Luftstrom und stellen somit einen Strömungswiderstand da, auch wenn die Zapfluft vom Flugzeugtriebwerk nicht benötigt wird.

Es besteht daher die Aufgabe, die Entnahme von Zapfluft strömungstechnisch effizient zu gestalten.

Mit einem Einstellmittel für die gezielte Einstellung eines Einlassquerschnitts einer Öffnung in oder an einer Wandung ist es möglich, variabel Zapfluft zu entnehmen. Je nachdem, wie der Einlassquerschnitt relativ zur strömenden Luft orientiert ist, kann die Entnahme der Zapfluft gesteuert werden.

Dabei kann in einer ersten Stellung des Einlassquerschnitts die Öffnung geschlossen sein oder so orientiert sein, dass keine oder im Wesentlichen keine Zapfluft durch die Öffnung hindurchtritt. In einer zweiten Stellung des Einlassquerschnitts ist dieser unter einem Winkel, insbesondere unter einem rechten Winkel zur strömenden Luft orientiert. In der zweiten Stellung kann somit Luft durch den Einlassquerschnitt hindurchfließen.

Erfindungsgemäß ist die Öffnung für die Zapfluft in oder an einer verformbaren Basis angeordnet und das Einstellmittel wirkt auf die verformbare Basis zur Änderung des Einlassquerschnitts für die Öffnung relativ zur strömenden Luft ein. Dabei ist die verformbare Basis Teil eines metallischen Gehäuses im Flugzeugtriebwerk. Unter verformbar wird hier verstanden, dass die Basis insbesondere auch elastisch verformbar ist.

In einer besonderen Ausführungsform ist ein erstes verformbares Element mit der Öffnung Teil der Wandung, wobei das erste verformbare Element mit einem zweiten verformbaren Element als Teil der Wandung gekoppelt ist, so dass in der ersten Stellung die verformbaren Elemente im Wesentlichen parallel zur strömenden Luft angeordnet sind, wobei das Einstellmittel durch Verformung des zweiten verformbaren Elementes das erste verformbare Element so verformt, dass in der zweiten Stellung der Einlassquerschnitt in die strömende Luft ragt.

Eine Möglichkeit der Kopplung besteht darin, dass sich mindestens zwei verformbare Elemente einander überlappen, so dass bei einer Verformung eines zweiten verformbaren Elementes, das unter einem ersten verformbaren Element angeordnet ist, das obere verformbare Element bei der Verformung auf Grund der Überlappung mit verformt. Das obere verformbare Element wird somit vom unteren bei der Verformung mitgenommen.

Dabei kann das mindestens eine verformbare Element als elastisch verformbares Element, insbesondere ein flacher Streifen oder Balken ausgebildet sein.

Da das erste und zweite verformbare Element in der zweiten Stellung miteinander gekoppelt sind, insbesondere sich berühren, weist das erste verformbare Element ein Blockierelement auf, das in der zweiten Stellung als Anschlag für das zweite verformbare Element dient. Damit wird eine sichere Lage in der zweiten Stellung sichergestellt.

In einer weiteren Ausführungsform dient das Einstellmittel zur Einwirkung auf ein verformbares Element, um durch eine Bewegung des verformbaren Elementes relativ zu einem Basiselement einen Einlassquerschnitt zu öffnen oder zu schließen. Auch hier wird somit der Einlassquerschnitt für die Zapfluft geändert, wobei hier direkt auf die Größe der Öffnung eingewirkt wird.

Insbesondere wenn die verformbaren Elemente aus der Wandung ausgestanzt sind oder die verformbaren Elemente Streifenform aufweisen, dient in einer Ausführungsform mindestens ein Abdichtelement zur Abdichtung einer bei der Verformung des mindestens einen verformbaren Elementes entstehenden Öffnung. Dabei kann das mindestens eine Abdichtelement aus einem weichen, biegsamen Material ausgebildet sein, wobei das Abdichtelement im Betrieb unter einer Vorspannung das mindestens eine verformbare Element berührt.

In einer weiteren Ausführungsform weist das Einstellmittel einen elektrischen, hydraulischen und / oder pneumatischen Aktuator zur Verstellung des Einlassquerschnitts auf. Diese können platzsparend relativ große Kräfte übertragen.

Durch Variabilität des Einlassquerschnitts ist es möglich, dass der Strom der Zapfluft über ein Ventil und / oder durch eine Einstellung des Einlassquerschnittes durch das Einstellmittel selbst regelbar ist. Das Ventil könnte z.B. hinter der Öffnung für die einströmende Zapfluft angeordnet sein. Alternativ oder zusätzlich kann die Ausrichtung des Einlassquerschnitts dazu verwendet werden, die abgezweigte Luftmenge zu regeln.

Die Aufgabe wird auch durch ein Flugzeugtriebwerk mit den Merkmalen des Anspruchs 13 gelöst.

Ausführungsformen der Erfindung werden beispielhaft in den folgenden Figuren dargestellt. Dabei zeigt
- Fig. 1: eine Schnittansicht eines Flugzeugtriebwerks mit einer Ausführungsform einer Vorrichtung zur Entnahme von Zapfluft;
- Fig. 2A: eine schematische Perspektivansicht einer weiteren Ausführungsform einer Vorrichtung zur Entnahme von Zapfluft in einer ersten Stellung;
- Fig. 2B: die Ausführungsform der Vorrichtung zur Entnahme von Zapfluft gemäß Fig. 2A in einer zweiten Stellung;
- Fig. 2C: Darstellung eines Details der Ausführungsform gemäß Fig. 2A;
- Fig. 3A: eine schematische Perspektivansicht einer weiteren Ausführungsform einer Vorrichtung zur Entnahme von Zapfluft in einer ersten Stellung;
- Fig. 3B: die Ausführungsform der Vorrichtung zur Entnahme von Zapfluft gemäß Fig. 3A in einer zweiten Stellung;
- Fig. 4A: eine schematische Perspektivansicht einer Variation der Ausführungsform einer Vorrichtung zur Entnahme von Zapfluft in einer zweiten Stellung;
- Fig. 4B: die Ausführungsform der Vorrichtung zur Entnahme von Zapfluft gemäß Fig. 4A in einer Zwischenstellung;
- Fig. 4C: zeigt in einer Schnittansicht den Aktuator für die Einstellung des Einlassquerschnittes für die Öffnung in der Ausführungsform gemäß Fig. 4A;
- Fig. 5A: eine schematische Schnittansicht einer weiteren Ausführungsform einer Vorrichtung zur Entnahme von Zapfluft in einer ersten Stellung;
- Fig. 5B: die Ausführungsform der Vorrichtung zur Entnahme von Zapfluft gemäß Fig. 5A in einer zweiten Stellung;
- Fig. 6A: eine schematische Schnittansicht einer weiteren Ausführungsform einer Vorrichtung zur Entnahme von Zapfluft mit einer verformbaren Strömungsleitvorrichtung in einer ersten Stellung;
- Fig. 6B: die Ausführungsform der Vorrichtung zur Entnahme von Zapfluft gemäß Fig. 6A in einer zweiten Stellung;
- Fig. 7A: eine schematische Schnittansicht einer weiteren Ausführungsform einer Vorrichtung zur Entnahme von Zapfluft mit einer starren Strömungsleitvorrichtung in einer ersten Stellung;
- Fig. 7B: die Ausführungsform der Vorrichtung zur Entnahme von Zapfluft gemäß Fig. 7A in einer zweiten Stellung;
- Fig. 8: eine weitere Ausführungsform einer Vorrichtung zur Entnahme von Zapfluft mit zwei übereinanderliegenden Elementen zur Bildung einer Öffnung.

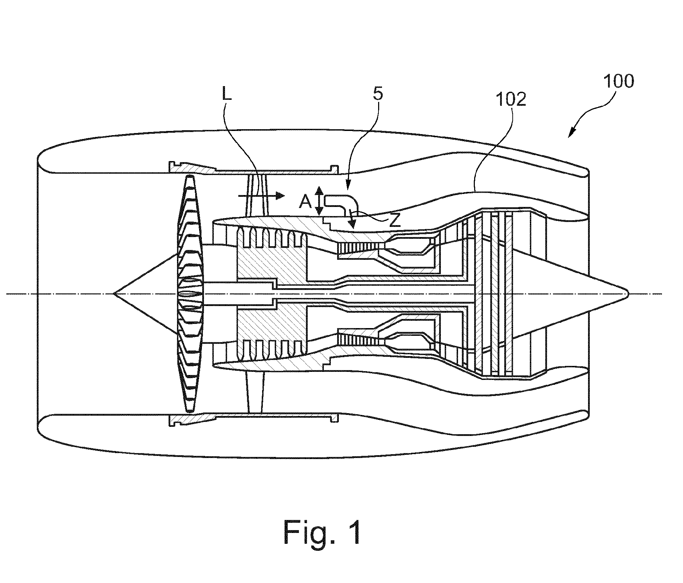

In Fig. 1 ist eine schematische Schnittansicht durch ein Flugzeugtriebwerk 100 mit einer an sich bekannten Vorrichtung 5 für die Entnahme von Zapfluft Z dargestellt. Die Vorrichtung 5 ragt hier starr und ständig in die strömenden Luft L im dem Nebenstromkanal (Bypass-Duct) 101, so dass die Zapfluft Z dieser strömenden Luft L entnommen wird. Der Einlassquerschnitt A der Öffnung 1 für die strömende Luft ist hier konstant und kann im Betrieb nicht geändert werden. Der Nebenstromkanal 101 wird radial innenliegend durch eine Wandung 102 (auch Fairing genannt) begrenzt.

Die Zapfluft Z wird nach dem Abzweigen aus der strömenden Luft L z.B. für Kühlzwecke in das Innere des Flugzeugtriebwerks 100 geleitet. In alternativen Ausführungsformen kann die Zapfluft Z aus einer anderen Luftströmung, z.B. der Freiluftströmung um das Flugzeugtriebwerk 100 herum, abgezweigt werden und für andere Zwecke verwendet werden, wie z.B. die Klimatisierung der Kabine eines Flugzeugs.

Im Folgenden werden Ausführungsformen für die Vorrichtung 5 zur Entnahme von Zapfluft Z dargestellt, bei denen mittels eines Einstellmittels 10 eine gezielte Einstellung eines Einlassquerschnitts A für eine Öffnung 1 für die Zapfluft Z möglich ist.

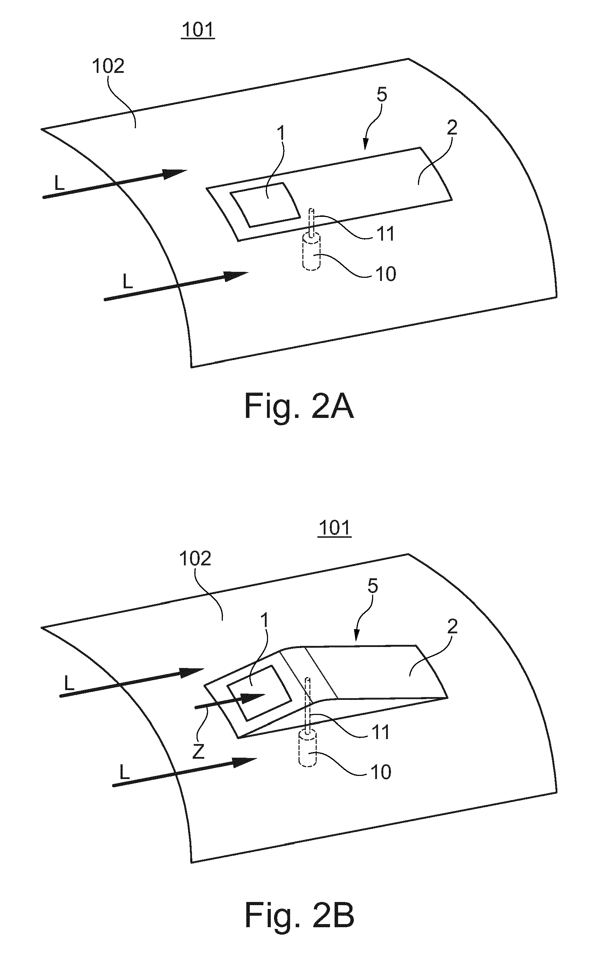

In Fig. 2A und 2B ist eine Ausführungsform einer Vorrichtung 5 zur Entnahme von Zapfluft Z in jeweils zwei Stellungen dargestellt. Dabei weist die Vorrichtung 5 zur Entnahme von Zapfluft Z eine Öffnung 1 auf, die in einer verformbaren Basis 2 in der Wandung 102 des Nebenstromkanals 101 dargestellt ist.

In Fig. 2A liegt die Öffnung 1 flach in der Wandung 102 und wird von der strömenden Luft L im Nebenstromkanal 101 überströmt. Der Einlassquerschnitt A der Öffnung 1 ist hier Null, da die strömende Luft L parallel zur Öffnung 1 strömt; d.h. der Strömungswiderstand entspricht im Wesentlichen dem einer parallel angeströmten Fläche. Die Öffnung 1 ist dabei in einem verformbaren, insbesondere elastisch verformbaren Bereich, der verformbaren Basis 2 angeordnet. Die verformbare Basis 2 kann dabei ein metallisches Material (z.B. ein Blech) oder ein Kunststoffmaterial (z.B. Silikonwandung) sein oder diese Materialien aufweisen.

In Fig. 2B ist eine andere Stellung der Öffnung 1 dargestellt, die dadurch erreicht wurde, dass ein Aktuator 11 eines Einstellmittels 10 die verformbare Basis 2 verformt hat, d.h. hier nach oben gedrückt hat. Das Material wird dadurch zumindest vorübergehend gelängt. Die Verformung ist in der Fig. 2B überhöht dargestellt, um das Prinzip zu verdeutlichen.

Durch die Verformung steht der Einlassquerschnitt A für die Öffnung 1 geneigt in der strömenden Luft L, so dass der Zapfluft Z aus der strömenden Luft L abgezweigt werden kann. Wenn der Aktuator 11 wieder zurückgefahren wird, ebnet sich die Öffnung 1 durch die elastische Eigenschaften des Materials im Wesentlichen wieder ein, so dass die in Fig. 2A beschriebene Situation vorliegt.

In dieser Ausführungsform wird durch das Einstellmittel 10 im Wesentlichen reversibel eine Erhöhung in die Wandung 102 eingebracht, um die Öffnung 1 in die strömende Luft L zu bringen.

In alternativen Ausführungsformen kann das Einstellmittel 10 einen gänzlich anders ausgebildeten Aktuator 11 aufweisen. Möglich ist z.B. die Verwendung einer Art Kissen, das mit einem Hydrauliköl oder Druckluft befüllt wird, um die Stellung der Öffnung 1 gemäß Fig. 2B zu erreichen.

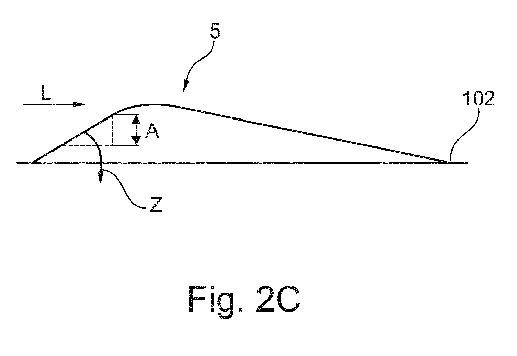

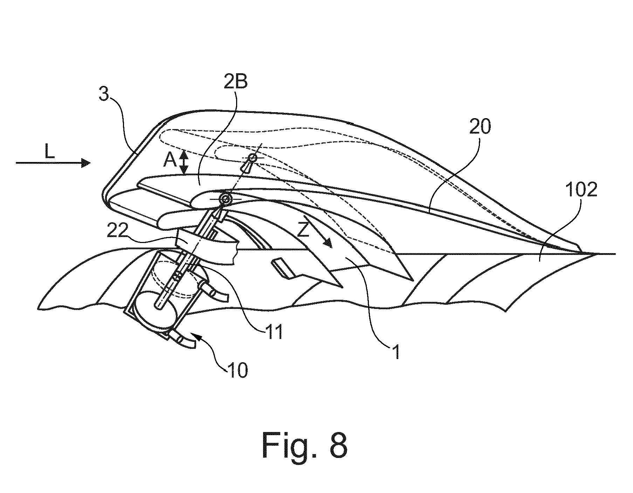

In Fig. 2C ist das Konzept des Einlassquerschnitts A noch einmal dargestellt. Es handelt sich dabei um die Fläche, die senkrecht zu der einfallenden Strömung L liegt. Würde die Öffnung 1 in Fig. 2C unter einem 90° Winkel in die Strömung L ragen, würden der Einlassquerschnitt A und die Öffnung 1 die gleiche Fläche aufweisen. In anderen Ausführungsformen (siehe Fig. 8A, 8B) kann der Einlassquerschnitt A vor der eigentlichen Öffnung 1 liegen.

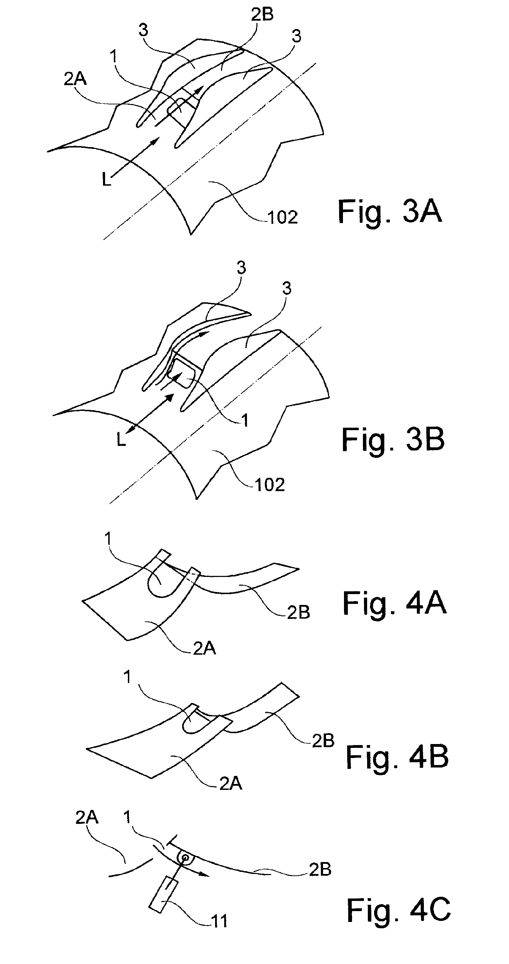

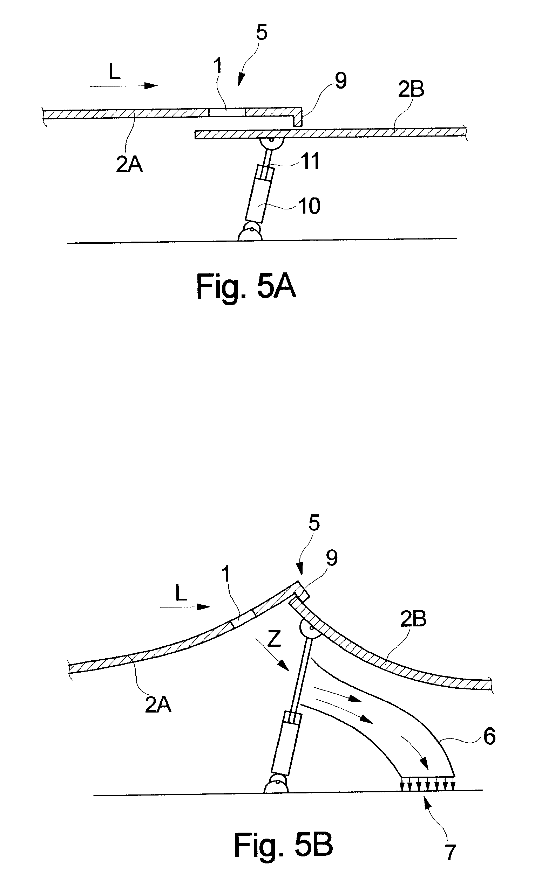

In Fig. 3A und 3B ist eine Abwandlung der in Fig. 2A und 2B dargestellten Ausführungsform wiedergegeben, bei der Bleche verformt werden, damit sie einen Einlaufkanal bilden können. Auch hier ist eine Öffnung 1 in der verformbaren Basis 2 angeordnet. Die verformbare Basis 2 weist hier zwei einander überlappende verformbare, insbesondere elastische Elemente 2A, 2B (siehe z.B. Fig. 5A, 5B) auf, die jeweils als verformbare, flache Balken (man könnte die elastischen Elemente 2A, 2B anschaulich als Zungen bezeichnen) an oder in der Wandung 102 angeordnet sind. Die Öffnung 1 ist dem hier oben liegenden ersten verformbaren Element 2A angeordnet.

Aus Gründen der Übersichtlichkeit ist das Einstellmittel 10 mit seinem Aktuator 11 hier nicht dargestellt.

Fig. 4A, 4B ist eine Variation der Ausführungsform gemäß Fig. 3A, 3B dargestellt, so dass auf die obige Beschreibung Bezug genommen werden kann. Im Gegensatz zu der Ausführungsform der Fig. 3A, 3B ist hier keine geschlossene Ausstanzung im oberen verformbaren Element 2A vorgesehen, sondern eine U-förmige Ausstanzung. Die Öffnung 1 wird hier in der zweiten Stellung (Fig. 4A) von dem oberen und unteren verformbaren Element 2A, 2B gebildet. Die Fig. 4B zeigt eine Zwischenstellung.

In Fig. 4C ist schematisch dargestellt, wie der Aktuator 11 gegen das untere verformbare Element 2B drückt und damit das obere verformbare Element 2A mit nach oben nimmt. Damit die Öffnung 1 in den Luftstrom L geführt.

In Fig. 5A, 5B wird dargestellt, in welcher Weise die verformbaren Elemente 2A, 2B verformbar sind, so dass durch den Eingriff des Einstellmittels 10 der Einlassquerschnitt A vergrößert werden kann, wie dies im Zusammenhang mit den Fig. 2B und 2C beschrieben wurde. Dabei drückt der Aktuator 11 gegen die untere der beiden "Zungen". Je mehr der Aktuator 11 ausfährt, desto mehr biegen sich die zungenartigen verformbaren Elemente 2A, 2B nach oben und geben einen immer größeren Lufteinlassquerschnitt frei.

Beim Hochbiegen der zungenartigen verformbaren Elemente 2A, 2B entstehen seitlich Öffnungen, die gegenüber der Umgebung weitgehend abgeschlossen werden sollen, um ein Entweichen der Zapfluft Z durch die seitlichen Öffnungen weitgehend zu verhindern.

Daher weist die Ausführungsform gemäß Fig. 3A, 3B seitliche Abdichtelemente 3 auf, die seitlich neben den verformbaren Elementen 2A, 2B parallel zur strömenden Luft L angeordnet sind. Dabei entspricht die radiale Erstreckung der Abdichtelemente 3 in etwa der nach oben verformten Fläche der verformbaren Basis 2 gemäß den Stellungen in den Fig. 2B und 3B. Auf diese Weise ist in der Stellung der Vorrichtung 5 zur Entnahme von Zapfluft Z gemäß Fig. 3B sichergestellt, dass zumindest ein Großteil der Zapfluft Z in das Innere abgeleitet werden kann. Die steifen Abdichtelemente 3 können auch mit weichem Kunststoff beschichtet sein oder aus Kunststoff bestehen, um eine bessere Dichtwirkung zu den verformbaren Elementen 2A, 2B zu erreichen. Die Abdichtelemente 3 können auch Bleche sein.

In den Fig. 5A, 5B ist eine Ausführungsform der Vorrichtung 5 zur Entnahme von Zapfluft Z dargestellt, die grundsätzlich nach der Art der in Fig. 2A, 2B, 3A, 3B, 4A, 4B dargestellten Ausführungsformen funktioniert. Hier sind aus Gründen der Übersichtlichkeit keine Abdichtelemente 3 dargestellt.

In der Schnittansicht der Fig. 5A ist die verformbare Basis 2 der Vorrichtung 5 zur Entnahme von Zapfluft Z dargestellt, wobei die verformbare Basis 2 hier zwei elastisch verformbare Elemente 2A, 2B aufweist, die jeweils zungenförmig an oder in der Wandung 102 des Nebenstromkanals 101 angeordnet ist. Das obere verformbare Element 2A weist die Öffnung 1 auf, wobei das obere verformbare Element 2A in der ersten Stellung (siehe Fig. 5A) das untere verformbare Element 2B überlappt. Die Überlappung führt bei einer solchen Ausgestaltung zu einer gewissen Abdichtung der Öffnung 1. In dieser Stellung strömt die Luft L mit kleinem Strömungswiderstand über die Vorrichtung 5 hinweg.

Die Öffnung 1 kann durch das untere verformbare Element 2B in der Ausgangsposition (Fig. 5A) mindestens teilweise abgedeckt sein, so dass ein direkter Luftstrom in das Innere abgeblockt wird. Mit zunehmenden Anstellwinkel des unteren verformbaren Elementes 2B vergrößert sich der Einlassquerschnitt A, weil das untere verformbare Element 2B, das obere verformbare Elemente 2A an oben drückt, so dass die Öffnung 1 immer mehr in die strömende Luft L gehalten wird.

Das Einstellmittel 10 greift von unten an das untere verformbare Element 2B an. Durch eine Ausdehnung des Aktuators 11 wird das untere elastisch verformbare Element 2B nach oben gedrückt (siehe Fig. 5B). Da das obere elastisch verformbare Element 2A das untere verformbare Element 2B überlappt, wird das obere verformbare Elemente 2A mit nach oben gedrückt. Dadurch wird die Öffnung 1 in die strömende Luft L geführt, so dass der Einlassquerschnitt A sich vergrößert und Zapfluft 7 durch die Öffnung in das Innere gelangt.

In Fig. 5B ist in schematischer Weise eine Anwendungsform für die Zapfluft dargestellt, nämlich die Kühlung einer Wand 7. Dazu wird durch die Öffnung 1 eintretende Zapfluft Z durch einen Kühlkanal 6 auf die zu kühlenden Fläche 7 geleitet.

Das erste verformbare Element 2A weist hier ein Blockierelement 9 auf, das am Ende des streifenförmigen ersten verformbaren Elements 2A angeformt oder angeordnet ist. Das Blockierelement 9 ist als eine Art Haken ausgebildet, der sich rechtwinklig in Richtung des zweiten verformbaren Elementes 2B erstreckt. Wie in Fig. 5B dargestellt, kann dieses Blockierelement 9 beim Hochbiegen des zweiten verformbaren Elementes 2B einen Anschlag bilden, so dass das zweite verformbare Element 2B nicht am ersten verformbaren Element 2A vorbei rutschen kann. In Fig. 5B befindet sich das zweite verformbare Element 2B nicht ganz in der Anschlagposition.

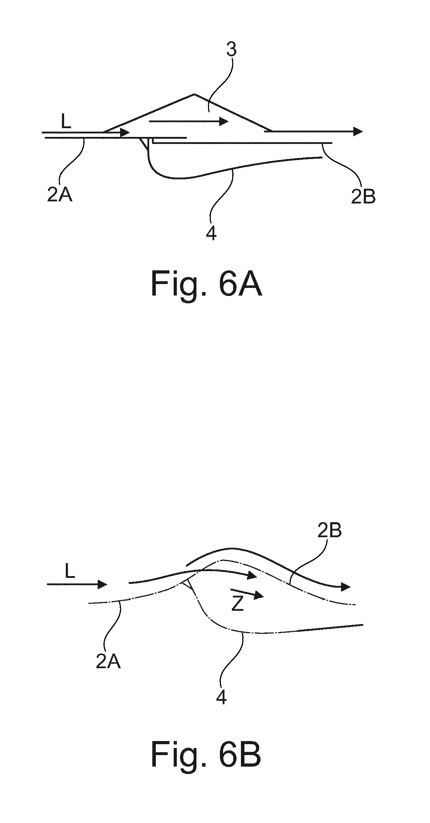

In den Fig. 6A, 6B ist eine weitere Ausführungsform einer Vorrichtung 5 zur Entnahme von Zapfluft dargestellt, die elastisch verformbaren Elemente 2A, 2B aufweist, wobei im ersten verformbaren Element 2A die Öffnung 1 für die Zapfluft Z angeordnet ist. Die Funktionsweise entspricht dabei der Ausführungsform gemäß Fig. 5A, 5B, d.h. das hier nicht dargestellte Einstellmittel 10 mit dem Aktuator 11 greift an das untere verformbare Element 2B an. In Fig. 6A liegt die Öffnung 1 in dem ersten verformbaren Element 2A flach parallel zur strömenden Luft L. In der Fig. 6B wurde das Einstellmittel 10 aktiviert, um das untere verformbare Element 2B nach oben zu drücken, so dass Zapfluft Z in das Innere strömen kann.

Die hier dargestellte Ausführungsform weist unterhalb der Wandung 102 ein verformbares Strömungsleitmittel 4 für die Führung der Zapfluft Z auf, dass hier in etwa L-förmig gebogen ist und dessen kurzer Schenkel mit dem ersten verformbaren Element 2A gekoppelt ist. Das Strömungsleitmittel 4 weist hier ein flaches, biegsames Material wie Blech, Kunststoff oder einem Textil auf.

Beim Hochbiegen des ersten verformbaren Elementes 2A (Fig. 6B) wird das verformbare Strömungsleitmittel 4 mit nach oben gezogen. Die eintretende Zapfluft Z strömt entlang dieses Strömungsleitmittels 4 in das Innere ein. Eine u.U. unerwünschte Ausbreitung der Strömung der Zapfluft Z nach vorne wird damit im Wesentlichen verhindert.

Die Abdichtelemente 3 sind nach unten gezogen (d.h. in das Innere hinein, was hier aus Gründen der Übersichtlichkeit nicht dargestellt ist) und dichten somit das Strömungsleitmittel 4 an den Seiten ab. Damit bildet sich durch das Strömungsleitelement 4, den Abdichtelemente 3 und dem verformbaren Element 2B ein definierter Strömungskanal. Das Strömungsleitmittel 4 kann dabei aus einem metallischen Werkstoff, wie z.B. einem Blech bestehen.

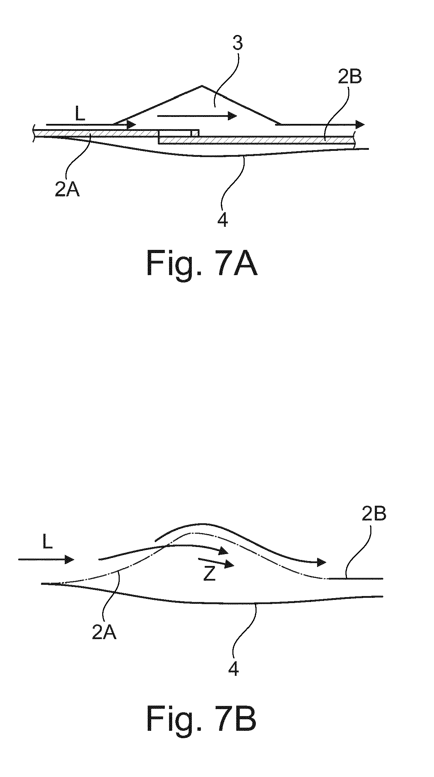

In Fig. 7A, 7B ist eine Abwandlung, der in der Fig. 6A, 6B dargestellten Ausführungsform dargestellt, so dass auf die Beschreibung Bezug genommen werden kann. Auch hier wirkt ein - aus Gründen der Einfachheit nicht dargestelltes - Einstellmittel 10 auf das untere verformbare Element 2B (Fig. 7B).

Im Unterschied zur Ausführungsform nach Fig. 6A, 6B ist hier das Strömungsleitmittel 4 jedoch relativ starr ausgebildet. Auch ist die Anbindung an das obere verformbare Element 2A weiter von der Überlappungsstelle der verformbaren Elemente 2A, 2B entfernt angeordnet. Bei der Verformung der verformbaren Elemente 2A, 2B wird dieses Strömungsleitmittel 4 somit nicht so sehr mitgeführt, wie dies in der anderen Ausführungsform der Fall war.

Grundsätzlich können in allen Ausführungsformen die verformbaren Elemente 2A, 2B jeweils mit einzelnen Einstellmitteln 10 versehen sein.

Die Ausführungsformen der Fig. 3 bis 7 weisen zwei verformbare Elemente 2A, 2B auf, die beide durch ein Einstellmittel 10 verformt werden, wobei das Einstellmittel 10 jeweils nur auf eines der beiden verformbaren Mittel 2B einwirkt. Durch die Verformung wird dabei jeweils eine Öffnung 1 in der Wandung 102 in die strömende Luft L bewegt.

In Fig. 8 ist eine Ausführungsform dargestellt, bei der nur ein verformbares Element 2B durch das Einstellmittel 10 bewegt wird, um einen Einlassquerschnitt A für eine Öffnung 1 in der Wandung 102 einzustellen. Diese geöffnete Stellung des verformbaren Elementes 2B ist in Fig. 8 gestrichelt dargestellt.

In der geschlossenen Stellung (durchgezogene Linien) liegt das verformbare Element 2B auf einem Basiselement 8 auf. Sowohl das Basiselement 8 als auch das verformbare Element 2B sind hier als flache Streifen ausgebildet, die in etwa die gleiche Größe haben. Seitlich werden das verformbare Element 2B und das Basiselement 8 von den Abdichtelementen 3 (in der Fig. 8 ist nur das in Blickrichtung hinten liegende Abdichtelement 3 dargestellt) begrenzt.

In der Fig. 8 ist auch in schematischer Weise ein Hydraulikzylinder des Einstellmittels 10 dargestellt. Wird der Hydraulikzylinder nach oben bewegt, wird der Aktuator 11 ebenfalls nach oben bewegt. Das Basiselement 8 weist eine Öffnung auf, durch die der Aktuator 11 hindurch ragt.

In der geschlossenen Stellung liegt das verformbare Element 2B auf dem Basiselement 8 auf, so dass es keinen offenen Einlassquerschnitt A gibt.

Wird nun der Aktuator 11 nach oben bewegt, wird das verformbare Element 2B nach oben gedrückt, so dass sich ein Einlassquerschnitt A öffnet. Dieser gibt nun eine Art Kanal, gebildet aus dem verformbaren Elemente 2B, zwei Seitenwänden der Abdichtelemente 3 und der unteren Wand, für die Zapfluft Z in Richtung der Öffnung 1 frei.

Wird der Aktuator 11 wieder nach unten verfahren, senkt sich das verformbare Element 2B ab.

An das verformbare Element 2B kann sich stromabwärts ein Strömungsleitelement 20 anschließen. Dieses ist gleitend oder fest an der Wandung 102 (Fairing) angeordnet. Die einströmende Luft L reißt somit nicht hinter dem verformbaren Element 2B am Anfang ab, sondern wird durch das Strömungsleitelement 20 weiter geleitet. Das Strömungsleitelement 20 ist biegsam und bewegt sich mit dem verformbaren Element 2B.

Ein stromlinienförmiges Dichtungselement 22 deckt den Aktuator 11 strömungsgünstig ab.

In den Ausführungsbeispielen wurde explizit auf die Verwendung der Zapfluft Z zu Kühlzwecken verwiesen. Die Ausführungsformen sind aber nicht auf diese Anwendung beschränkt. Die Zapfluft Z kann im Inneren des Flugzeugtriebwerkes 100 auch zum Aufbau eines pneumatischen Gegendruckes in einem Lager verwendet werden, um z.B. Öl am Austreten aus dem Lagergehäuse zu hindern.

### Bezugszeichenliste

- 1: Öffnung für Zapfluft
- 2: verformbare Basis
- 2A: oberes (verformbares) Element
- 2B: (unteres) verformbares Element
- 3: Abdichtungselement
- 4: Strömungsleitmittel
- 5: Vorrichtung für die Entnahme von Zapfluft
- 6: Kühlkanal
- 7: zu kühlende Fläche
- 8: Basiselement
- 9: Blockierelement

- 10: Einstellmittel
- 11: Aktuator

- 20: Strömungsleitelement
- 22: Dichtungselement

- 100: Flugzeugtriebwerk
- 101: Nebenstromkanal
- 102: Wandung (Fairing)

- A: Einlassquerschnitt
- L: strömende Luft
- Z: Zapfluft

## Patentansprüche

1. Vorrichtung zur Entnahme von Zapfluft aus strömender Luft an oder in einem Flugzeugtriebwerk, mit einem Einstellmittel (10) für die gezielte Einstellung eines Einlassquerschnitts (A) einer Öffnung (1) in oder an einer Wandung (102) für die Zapfluft (Z) im Betrieb des Flugzeugtriebwerkes (100),
**dadurch gekennzeichnet,**
**dass** die Öffnung (1) für die Zapfluft (Z) in oder an einer verformbaren Basis (2) angeordnet ist und das Einstellmittel (10) auf die verformbare Basis (2) zur Änderung des Einlassquerschnitts (A) der Öffnung (1) relativ zur strömenden Luft (L) einwirkt, wobei die verformbare Basis (2) Teil eines metallischen Gehäuses im Flugzeugtriebwerk (100) ist.

2. Vorrichtung nach Anspruch 1, **dadurch gekennzeichnet, dass** in einer ersten Stellung des Einlassquerschnitts (A) die Öffnung (1) geschlossen ist oder so orientiert ist, dass keine Zapfluft (Z) oder im Wesentlichen keine Zapfluft (Z) durch die Öffnung (1) hindurchtritt.

3. Vorrichtung nach Anspruch 1 oder 2, **dadurch gekennzeichnet, dass** in einer zweiten Stellung des Einlassquerschnitts (A) der Öffnung (1) unter einem Winkel, insbesondere unter einem rechten Winkel zur strömenden Luft (L) orientiert ist.

4. Vorrichtung nach mindestens einem der vorhergehenden Ansprüche, **gekennzeichnet durch** ein erstes verformbares Element (2A) mit der Öffnung (1) als Teil der Wandung (102), wobei das erste verformbare Element (102) mit einem zweiten verformbaren Element (2B) als Teil der Wandung (102) gekoppelt ist, so dass in der ersten Stellung die verformbaren Elemente (2A, 2B) im Wesentlichen parallel zur strömenden Luft (L) angeordnet sind, wobei das Einstellmittel (10) **durch** Verformung des zweiten verformbaren Elementes (2B) das erste verformbare Element (2A) so verformt, dass in der zweiten Stellung die Öffnung (1) in die strömende Luft (L) ragt.

5. Vorrichtung nach Anspruch 4, **dadurch gekennzeichnet, dass** sich mindestens zwei verformbare Elemente (2A, 2B) einander überlappen, so dass bei einer Verformung des zweiten verformbaren Elementes (2B), das unter dem ersten verformbaren Element (2A) angeordnet ist, das obere verformbare Element (2A) bei der Verformung auf Grund der Überlappung verformbar ist.

6. Vorrichtung nach Anspruch 4 oder 5, **dadurch gekennzeichnet, dass** das mindestens eine verformbare Element (2A, 2B) als elastisches Element, insbesondere als flacher Streifen oder Balken ausgebildet ist.

7. Vorrichtung nach mindestens einem der Ansprüche 4 bis 6, **dadurch gekennzeichnet, dass** das erste verformbare Element (2A) ein Blockierelement (9) aufweist, das in der zweiten Stellung als Anschlag für das zweite verformbare Element (2B) dient.

8. Vorrichtung nach mindestens einem der vorhergehenden Ansprüche, **dadurch gekennzeichnet, dass** das Einstellmittel (10) zur Einwirkung auf ein verformbares Element (2B), so ausgebildet ist, um durch eine Bewegung des verformbaren Elementes (2B) relativ zu einem Basiselement (8) einen Einlassquerschnitt (A) zu öffnen oder zu schließen.

9. Vorrichtung nach mindestens einem der vorhergehenden Ansprüche, **gekennzeichnet durch** mindestens ein Abdichtelement (3) zur Abdichtung einer bei der Verformung des mindestens einen verformbaren Elementes (2A, 2B) entstehenden Öffnung.

10. Vorrichtung nach Anspruch 9, **dadurch gekennzeichnet, dass** das mindestens eine Abdichtelement (3) aus einem weichen, biegsamen Material ausgebildet ist, wobei das Abdichtelement (3) im Betrieb unter einer Vorspannung das mindestens eine verformbare Element (2A, 2B) berührt.

11. Vorrichtung nach mindestens einem der vorhergehenden Ansprüche, **dadurch gekennzeichnet, dass** das Einstellmittel (10) einen elektrischen, hydraulischen und / oder pneumatischen Aktuator (11) zur Verstellung des Einlassquerschnitts (A) aufweist.

12. Vorrichtung nach mindestens einem der vorhergehenden Ansprüche, **dadurch gekennzeichnet, dass** der Strom der Zapfluft (Z) über ein Ventil und / oder durch eine Einstellung des Einlassquerschnittes (A) durch das Einstellmittel (10) regelbar ist.

13. Flugzeugtriebwerk mit mindestens einer Vorrichtung zur Entnahme von Zapfluft (Z) nach mindestens einem der Ansprüche 1 bis 12.
